# EUROPEAN PATENT APPLICATION

(11) **EP 4 533 952 A1**
(43) Date of publication of application: **09.04.2025**
(21) Application number: 24203056.7
(22) Date of filing: 26.09.2024
(51) Int. Cl.: A21C 9/08

(54) **DEVICE AND METHOD FOR SPACING DOUGH PIECES**

(30) Priority: 05.10.2023 NL 2035961
(71) Applicant: Radie B.V., 4104 BC Culemborg (NL)
(72) Inventor: van Blokland, Johannes, Josephus, Antonius, Culemborg (NL)
(74) Representative: IP Maison

(57) **Abstract**

Device for spacing dough pieces positioned adjacently in a length (L) direction on a carrier (16,17) that extends in a length (L) and a width (W) direction, comprising:
- At least one engaging means (7) for a dough piece, said engaging means movable between:
• a position engaging at least one dough piece and
• a position releasing the at least one dough piece;
- configured for:
a) moving to the position engaging at least one dough piece;
b) moving the at least one dough piece in the length (L) direction relative to the carrier (16,17);
c) moving the at least one dough piece in the width (W) direction relative to the carrier (16,17);
d) moving to the position releasing the at least one dough piece.

## Description

The present invention relates to a device and method for spacing dough pieces. In particular, the invention relates to dough pieces positioned adjacently in a length direction on a carrier. Throughout this application the terms length and width direction may indicate what can also be indicated with longitudinal and transverse directions.

When producing dough pieces for forming individual dough products, starting from a continuous dough sheet, a first step may be to cut the continuous dough sheet. This may be done by a guillotine knife positioned above a carrier on which the dough sheet is conveyed, or by a rotating knife positioned above the carrier as well. After this first step, the pieces are cut but still positioned close to each other on the carrier.

In order to further process the dough pieces, they often have to be separated from each other. A well known way to do so is to transfer them from a first endless belt conveyor to an adjacent endless belt conveyor, wherein the second belt conveyor is operated at a higher speed than the first belt conveyor.

This method is for instance applied when producing croissants. Triangular dough pieces are cut with a rotary knife from a(n endless) dough sheet, and then separated. Sometimes, also a centric rotation is necessary, in order to control the orientation of the dough pieces. It may for instance be necessary that the base of the triangular dough piece is leading or lagging.

When the triangular dough pieces comprise equilateral triangles or at least triangles having a base and height of comparable size, this method works satisfactory. However, when the triangular dough pieces have a small basis compared to their height, and the height of the triangular dough pieces extends in the width direction of a conveyor that transports the dough sheet, the requirement of a leading or lagging basis of the triangles leads to an inefficient use of the conveyor area. That is because once rotated, the relatively small triangles do no longer fill the width of the conveyor that transports them, while their larger length requires a high speed of the second conveyor belt.

It is a goal of the present invention to provide a device and method that take away this disadvantage, and/or to provide a useful alternative to the prior art.

The invention thereto proposes a device for spacing dough pieces positioned adjacently in a length direction on a carrier that extends in a length and a width direction, comprising:
- At least one engaging means for a dough piece, said engaging means movable between:
   - a position engaging at least one dough piece and
   - a position releasing the at least one dough piece;
- configured for:
   a) moving the engaging means to the position engaging at least one dough piece;
   b) moving the at least one dough piece in the length direction relative to the carrier;
   c) moving the at least one dough piece in the width direction relative to the carrier;
   d) moving engaging means to the position releasing the at least one dough piece.

The movement of the dough pieces in the length direction serves to separate them from each other after being cut. The movement in the width direction allows to divert subsequent dough pieces to different lanes on the carrier, which enables better use of the carrier surface. This in its turn allows to work with a smaller carrier area, or - as will be explained with reference to further embodiments - to apply a lower speed of a second conveyor in case the dough pieces are transferred from one conveyor to another.

In a practical embodiment, the device may be configured to move the dough piece that is the actual piece first in line of a cut but not yet separated dough sheet. The invention may in particular be used for processing dough pieces that are no equilateral triangles but have a small base relative to the height, for instance a height that is at least twice as long as the base width. These dough pieces may be cut from a sheet wherein their tips (the angle remote from the base) project alternatively in the right and the left width direction of the sheet.

In a preferred embodiment, the device according to the invention may therefore be configured for:
e) rotating the at least one dough piece to a predetermined final orientation during movement in the length and/or width direction. In practice this may mean that the dough piece is to be rotated a quarter turn.

When the dough pieces are cut from an (endless) sheet, it is beneficial when the device according to the invention comprises repeating steps a) to e) for each subsequent dough piece positioned adjacently in a length direction on the carrier, wherein step e) comprises alternately rotating subsequent dough pieces clockwise and counter-clockwise and wherein step c) comprises moving each subsequent dough piece in a first direction in the width direction and a second direction in the width direction, opposite to the first direction.

Preferably, the device is configured for simultaneously performing at least two of steps b), c) and e). That is: the engaging means for the dough piece may be configured to move and/or rotate the dough piece in one smooth movement.

When a continuous dough sheet is used, said sheet is normally provided on a conveyor belt. When the dough pieces are to be separated in the direction of conveyance, which is referred to as the length direction of the conveyor, there may be more space required in said length direction to support the dough pieces when separated, and even more when they are rotated in such way that they extend in the length direction.

The carrier may comprise a first conveyor, configured for transporting the dough pieces in the length direction, wherein the engaging means are configured to perform at least steps b), c) and e) with the first conveyor moving in the length direction and preferably also a second conveyor, arranged in length direction downstream adjacent to the first conveyor and configured for transporting the dough pieces in length direction during use at a higher speed than the first conveyor.

The engaging means may be coupled to a drive system for moving the engaging means from a starting point to an end point in the length direction while in the position engaging a dough piece and subsequently moving the engaging means from the end point back to the starting point while in the position that releases the at least one dough piece and wherein the device is configured for carrying out steps b), c) and e) between the starting point and the end point.

Systems for this purpose are known in the art and may be referred to as carousel. They may comprise a chain or belt that is looped around at least two wheels or gears. In the above configuration the starting point is above the first conveyor and the end point is above the second conveyor.

In order to increase the operational speed of the device, there may be several engaging means, arranged one behind the other in the length direction for gripping successive dough pieces.

These respective subsequent engaging means in the longitudinal direction may be alternately configured for rotating a piece of dough in a first direction of rotation and moving said piece of dough in a first direction in the width direction, respectively for rotating a next piece of dough in a second direction opposite to the first direction and moving said piece of dough in a second direction opposite to the first side.

For this purpose, the device according to the invention may comprise an eccentrically placed rotation point for supporting the engaging means, for both displacing the engaging means in the length and width directions during rotation of the engaging means.

When multiple dough pieces or even multiple sheets are processed in parallel, there may also be several engaging means, arranged next to each other in the width direction for gripping dough pieces located in parallel rows extending in the length direction.

The device, and in particular the drive system or carousel thereof may be configured for displacing the engaging means with at least one directional component directed towards the transport surface; for moving the engaging means from the position releasing the at least one dough piece to the position engaging the at least one dough piece.

The engaging means may be controlled by an electronic controller, or alternatively be provided with a mechanical operating member for controlling the longitudinal movement of the at least one dough piece relative to the carrier; and/or for moving the at least one dough piece in the width direction relative to the carrier and wherein the device is provided with a guide that is configured for operating the operating member by mechanical contact during movement of the engaging means.

The invention also relates to a method for placing dough pieces positioned adjacently in a length direction on a carrier that extends in a length and a width direction, comprising:
f) Gripping a dough piece;
g) Moving the at least one dough piece in the length direction relative to the carrier;
h) Displacing the at least one dough piece in the width direction relative to the carrier;
i) Releasing the at least one dough piece.

The method may further comprise: j) rotating the at least one dough piece a quarter turn while moving the dough piece in the length direction and/or in the width direction, and repeating steps f-j for each subsequent dough piece positioned adjacently in a length direction on the carrier, wherein step j) alternately rotates counterclockwise and clockwise and alternately rotates in a first direction in the width direction and in a first direction. moving each subsequent dough piece in the width direction in the second direction opposite to the first direction.

The invention will now be elucidated into more detail with reference to the following figures. Herein:
- Figure 1 shows a part of a device according to the prior art;
- Figure 2 shows a part of a device according to the invention;
- Figure 3 shows a side view of a device according to the invention; and
- Figure 4 shows dough pieces moved according to the invention.

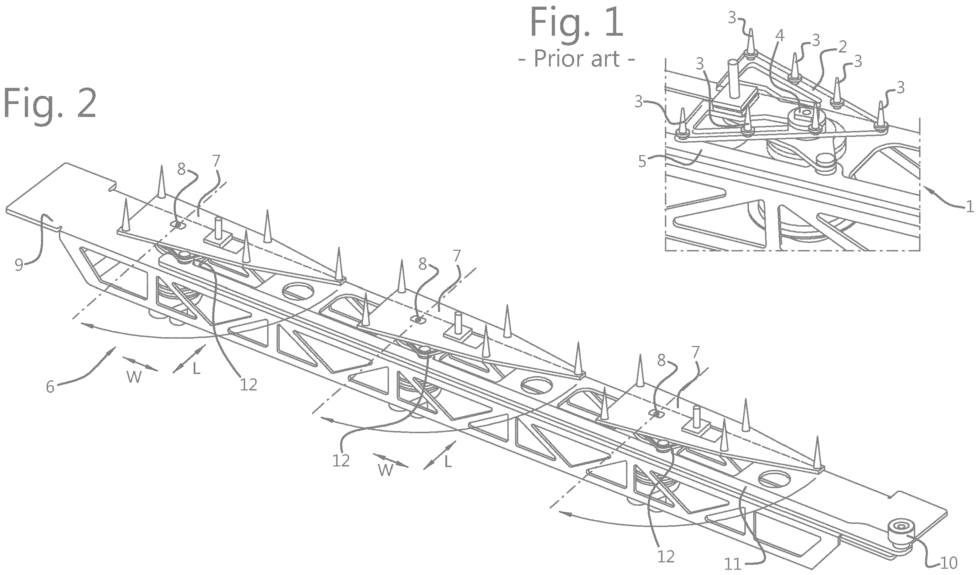

Figure 1 shows a part of a device according to the prior art. The device comprises engaging means for a dough piece, comprising an equilateral triangular base plate 2 provided with pins 3 and rotatably mounted on a support 5 about a central point of rotation 4, centrally positioned in the triangular base plate 2. The device according to the prior art can be suspended in a so called carousel, allowing it to move to a position engaging a dough piece, to rotate the dough piece by pushing it with the pins 3, and to move to a position where the dough piece is released again. Such carousel may comprise multiple identical engaging means, positioned behind each other in a length direction and next to each other in a width direction.

Figure 2 shows a part 6 of a device according to the invention comprising several engaging means 7, arranged next to each other in the width direction W for gripping dough pieces located in parallel rows extending in the length direction L of a carrier. The engaging means 7 comprise eccentrically placed rotation points 8 for supporting the engaging means 7 with respect to a support 9, for effectively both displacing dough pieces engaged by the engaging means 7 in the length L and width W directions during rotation of the engaging means 7. When placed in a device according to the invention, the support 9 extends in a width direction of the carrier. A device according to the invention may comprise a plurality of these parts 6, each comprising several engaging means 7, arranged one behind the other in the length direction L for gripping successive dough pieces.

Herein respective subsequent engaging means 7 in the longitudinal direction L may be alternately configured for rotating a piece of dough in a first direction of rotation and moving said piece of dough in a first direction in the width direction, respectively for rotating a next piece of dough in a second direction opposite to the first direction and moving said piece of dough in a second direction opposite to the first side.

Due to its construction, the device is configured for simultaneously performing the steps of moving the at least one dough piece in the length direction relative to the carrier, moving the at least one dough piece in the width direction relative to the carrier and rotating a dough piece to a predetermined final orientation during movement in the length and/or width direction.

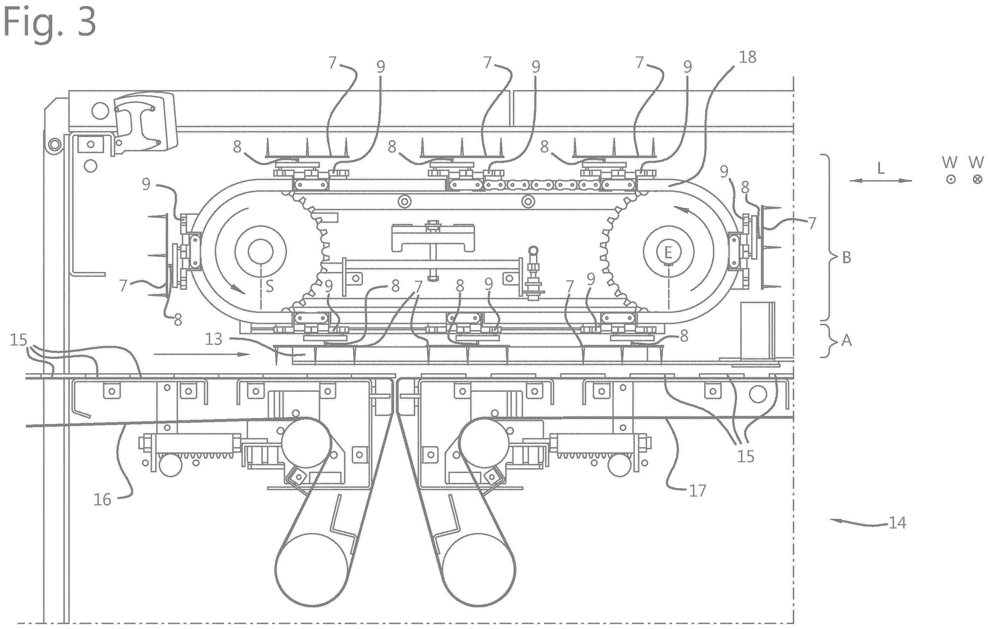

The engaging means 7 are provided with a (common) mechanical operating member 10, coupled by a rod 11 to transmission members 12 for controlling the movement of the engaging means 7 in the length direction relative to the carrier and for moving the engaging means 7 in the width direction relative to the support carrier and to rotate the engaging means 7 with respect to their support, and therewith a dough piece engaged by the engaging means 7 with respect to the carrier. The device is further provided with a guide 13 (visible in figure 3) that is configured for operating the operating member 10 by mechanical contact during movement of the engaging means 7. The operating member 10 is coupled to all engaging means 7 of the part 6.

Figure 3 shows a side view 14 of a device according to the invention for spacing dough pieces 15 positioned adjacently in a length L direction on a carrier 16, 17 that extends in a length L and a width W direction, comprising engaging means 7 for a dough piece, said engaging means 7 movable by a drive system formed by a looped chain 18 (which may also be a belt) between a position engaging at least one dough piece (when the engaging means 7 are within region A) and a position releasing the at least one dough piece (when the engaging means 7 are within region b), configured for moving the dough engaging means 7 to the position engaging at least one dough piece 15, moving the at least one dough piece 15 in the length direction L relative to the carrier 16, 17, moving the at least one dough piece 5 in the width direction W relative to the carrier 16, moving the engaging means 7 to the position releasing the at least one dough piece 15, and while doing so, rotating the at least one dough piece to a predetermined final orientation during movement in the length and/or width direction.

The device is configured for continuous operation, and so repeating the steps of moving dough pieces 15 in the length L and width W direction and alternately rotating subsequent dough pieces clockwise and counter-clockwise. The carrier 16, 17 comprises a first conveyor 16, configured for transporting the dough pieces in the length L direction, and a second conveyor 17, arranged in length direction L downstream adjacent to the first conveyor 16 and configured for transporting the dough pieces 15 in length direction L during use at a higher speed than the first conveyor 16. The engaging means 7 are coupled to a drive system 18 for moving the engaging means 7 from a starting point S to an end point E in the length direction while in the position engaging a dough piece and subsequently moving the engaging means from the end point back to the starting point while in the position that releases the at least one dough piece and wherein the device is configured for moving and rotating the dough pieces 15 between the starting point S and the end point E. The starting point S is above the first conveyor 16 and the end point E is above the second conveyor 17.

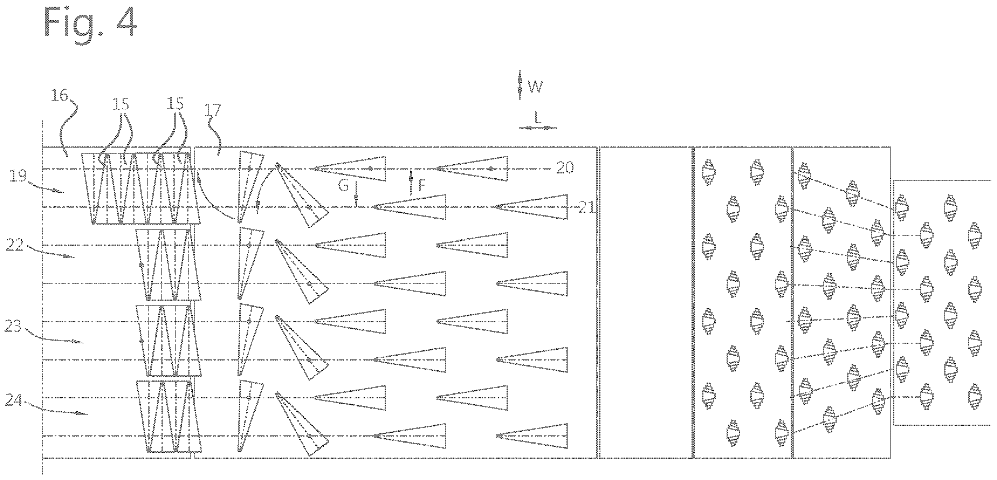

Figure 4 shows dough pieces 15 moved according to the invention. The dough pieces are engaged or gripped by engaging means 7 as described above, and then moved or displaced in the length direction L relative to the carrier 16, 17, as well as moved or displaced in the width direction W relative to the carrier 16, 17 and at the same time rotated a quarter turn. This is repeated for each subsequent dough piece 15 positioned adjacently in a length direction on the carrier, wherein subsequent dough pieces are alternately rotated counterclockwise and clockwise and alternately moved in a first direction F in the width direction and in a second direction opposite to the first direction. This way one row 19 of dough pieces 15 is doubled into two lanes 20, 21. In the embodiment shown, this is done for four parallel rows 19, 22, 23, 24 of dough pieces 15.

## Claims

1. Device for spacing dough pieces positioned adjacently in a length direction on a carrier that extends in a length and a width direction, comprising:
- At least one engaging means for a dough piece, said engaging means movable between:
• a position engaging at least one dough piece and
• a position releasing the at least one dough piece;
- configured for:
a) moving to the position engaging at least one dough piece;
b) moving the at least one dough piece in the length direction relative to the carrier;
c) moving the at least one dough piece in the width direction relative to the carrier;
d) moving to the position releasing the at least one dough piece.

2. Device according to claim 1, further configured for:
e) rotating the at least one dough piece to a predetermined final orientation during movement in the length and/or width direction.

3. Device according to claim 2, comprising:
- repeating steps a to e for each subsequent dough piece positioned adjacently in a length direction on the carrier, wherein step e) comprises alternately rotating subsequent dough pieces clockwise and counter-clockwise and wherein step c) comprises moving each subsequent dough piece in a first direction in the width direction and a second direction in the width direction, opposite to the first direction.

4. Device according to any of the preceding claims, configured for simultaneously performing at least two of steps b), c) and e).

5. Device according to any of the preceding claims, wherein the carrier comprises a first conveyor, configured for transporting the dough pieces in the length direction, wherein the engaging means are configured to perform at least steps b), c) and e) with the first conveyor moving in the length direction.

6. Device according to claim 5, wherein the carrier comprises a second conveyor, arranged in length direction downstream adjacent to the first conveyor and configured for transporting the dough pieces in length direction during use at a higher speed than the first conveyor.

7. Device according to claim 5 or 6, wherein the engaging means are coupled to a drive system for moving the engaging means from a starting point to an end point in the length direction while in the position engaging a dough piece and subsequently moving the engaging means from the end point back to the starting point while in the position that releases the at least one dough piece and wherein the device is configured for carrying out steps b), c) and e) between the starting point and the end point.

8. Device according to claim 6 or 7, wherein the starting point is above the first conveyor and the end point is above the second conveyor.

9. Device according to any of the preceding claims, comprising several engaging means, arranged one behind the other in the length direction for gripping successive dough pieces.

10. Device according to claim 9, wherein respective subsequent engaging means in the longitudinal direction are alternately configured for rotating a piece of dough in a first direction of rotation and moving said piece of dough in a first direction in the width direction, respectively for rotating a next piece of dough in a second direction opposite to the first direction and moving said piece of dough in a second direction opposite to the first side.

11. Device according to any of the preceding claims, comprising an eccentrically placed rotation point for supporting the engaging means, for both displacing the engaging means in the length and width directions during rotation of the engaging means.

12. Device according to any of the preceding claims, comprising several engaging means, arranged next to each other in the width direction for gripping dough pieces located in parallel rows extending in the length direction.

13. Device according to any of the preceding claims, configured for displacing the engaging means with at least one directional component directed towards the transport surface; for moving the engaging means from the position releasing the at least one dough piece to the position engaging the at least one dough piece.

14. Device according to any one of the preceding claims, including claim 7, wherein the engaging means are provided with a mechanical operating member for controlling the longitudinal movement of the at least one dough piece relative to the carrier; and/or for moving the at least one dough piece in the width direction relative to the carrier and wherein the device is provided with a guide that is configured for operating the operating member by mechanical contact during movement of the engaging means.

15. Method for placing dough pieces positioned adjacently in a length direction on a carrier that extends in a length and a width direction, comprising:
f) Gripping a dough piece;
g) Moving the at least one dough piece in the length direction relative to the carrier;
h) Displacing the at least one dough piece in the width direction relative to the carrier;
i) Releasing the at least one dough piece.

16. Method according to claim 15, comprising:
j) rotating the at least one dough piece a quarter turn while moving the dough piece in the length direction and/or in the width direction.

17. Method according to claim 16, comprising repeating steps f-j for each subsequent dough piece positioned adjacently in a length direction on the carrier, wherein step j) alternately rotates counterclockwise and clockwise and alternately rotates in a first direction in the width direction and in a first direction. moving each subsequent dough piece in the width direction in the second direction opposite to the first direction.
